# EUROPEAN PATENT SPECIFICATION

(11) **EP 2 354 049 B1**
(45) Date of publication and mention of the grant of the patent: **16.01.2013**
(21) Application number: 11153750.2
(22) Date of filing: 08.02.2011
(51) Int. Cl.: B65G 13/12, B65G 21/14

(54) **Flexible Conveyor**
Flexibler Förderer
Convoyeur flexible

(30) Priority: 09.02.2010 GB 201002087
(43) Date of publication of application: 10.08.2011
(73) Proprietor: CONVEYOR UNITS LIMITED, Stourport-on-Severn Worcestershire DY13 9PT (GB)
(72) Inventor: Toye, Edward William, Rock Kiderminster DY14 9DL (GB)
(74) Representative: Sessford, Russell

(56) References cited:
- EP-A1- 0 300 128
- WO-A1-00/44650
- US-A- 1 348 500
- US-A- 3 276 558
- US-A- 4 852 712
- US-A- 5 632 371

## Description

This invention relates to flexible conveyors, and more specifically flexible roller conveyors.

Extendible flexible roller conveyors are generally known to provide temporary or adaptable conveyors in circumstances where a permanent conveyor is not required or is undesirable. In general, known flexible roller conveyors comprise a scissors or "lazy tong" mechanism to provide opposed sides of the conveyor extending between wheeled supports, and rollers are supported between the opposed sides of the flexible conveyor.

US5632371 describes an extendible roller conveyor comprising a lazy tong mechanism, according to the preamble of claim 1.

A problem with such known conveyors is that due to the large number of moving parts, it is possible for the conveyor to fail after a relatively small number of extend-contract operating cycles. Another problem is supplying drive to the rollers in such a way that an appropriate level of drive is provided whatever the degree of extension of the conveyor. Conventionally, the drive is provided with a three-phase electric motor requiring an appropriate power supply. Finally, it is necessary for such conveyors to be robust to cope with mishandling within a working environment.

According to the invention, we provide a flexible conveyor comprising opposed extendible sides, the extendible sides supporting a plurality of rollers therebetween, each of the opposed extendible sides comprising a plurality of guide elements, the guide elements having a connection part thereof to engage a roller, each guide element being connected to an opposing guide element by a rigid connector, each guide element being connected to an adjacent guide element by a pair of arms one of the arms being pivotally attached at an end part thereof of to the guide element, the other of the arms being slidably engaged with the guide element, the opposed extendible sides extending between supports characterised in that a guide element of each opposed extendible side is connected to the support through a support bracket, the support bracket having a first connection fixedly connected to the support and a second floating connection at a lower point, whereby the support bracket is permitted to flex relative to the support.

An advantage of the present invention is that the flexibility of the support bracket relative to the support means that the life of the conveyor is extended since the wear at the connection between the guide element and the support is reduced, and stresses throughout the structure of the conveyor which could be caused by misalignments of the supports can be accommodated.

The support bracket may have an elongate slot to enable slidable engagement with a guide element.

The supports may be provided with wheels at a lower part thereof.

At least one of the rollers may be driven.

The driven roller may be driven by a motor supported on the rigid connectors extending between a plurality of the guide elements.

The motor may be mounted on a motor support bracket, the motor support bracket having opposed recesses to engage the rigid connectors.

A plurality of the rollers may be driveably connected to the driven roller.

The rollers may be drivingly connected via drive belts.

The drive belts may engage pulley wheels supported on the rigid connectors.

The motor may comprise a 24 VDC motor.

An end part of at least one of the rollers may be connected to a locking element, the locking element being shaped to engage the guide element when the roller is supported by the guide element, the locking element being operable to resist this disengagement of the roller and the guide element.

The locking element may comprise an aperture to receive an end part of the roller and a projection to engage a recess on the guide element.

Embodiments of the invention will now be described by way of example only with reference to the accompanying drawings, wherein;
Figure 1 is a side view of a roller conveyor embodying the present invention,
Figure 2 is a plan view of the flexible conveyor of Figure 1,
Figure 3 is an end view of the flexible conveyor of Figure 1,
Figure 4 is a view of part of the conveyor of Figure 1 in more detail,
Figure 5 is a side view of the part of the conveyor of Figure 4,
Figure 6 is a side view in more detail of part of the conveyor of Figure 1,
Figure 7A shows a side view of a guide element 20, and
Figure 7B is a plan view of the guide element 20,
Figure 8A is an end view of a locking element of the conveyor of Figure 1, and
Figure 8B is a side view of the locking element of Figure 8A.

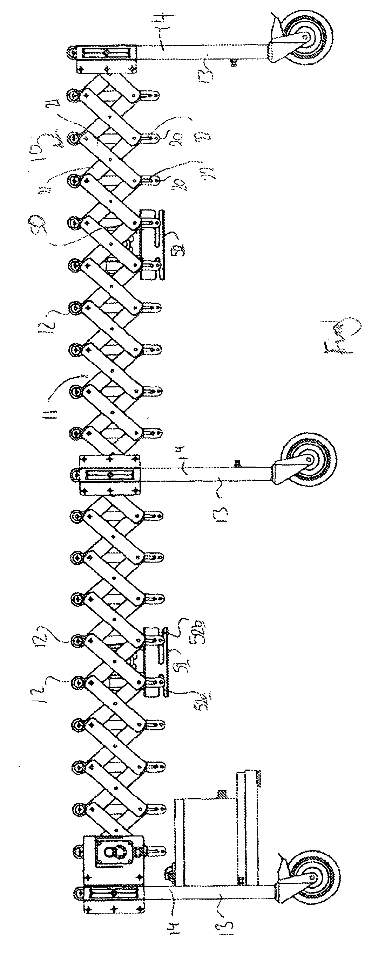

Referring now to Figures 1 to 3, a flexible conveyor is shown generally at 10 having opposed extendible sides generally shown at 11. A plurality of rollers 12 are supported between the opposed extendible sides 11 for rotational movement to conveyor a package supported on the rollers 12. The sides 11 are supported at each end and at one or more intervals by supports 13. In this example, the supports 13 each comprises a pair of uprights 14 connected by a cross-bar 15 and provided with wheels 16 to enable to conveyor 10 to be moved to a desired position. Handles 17 are provided at an upper part of the uprights 14 to provide a part of the conveyor 10 which may be safely grasped to enable the conveyor to be moved, extended and contracted as appropriate.

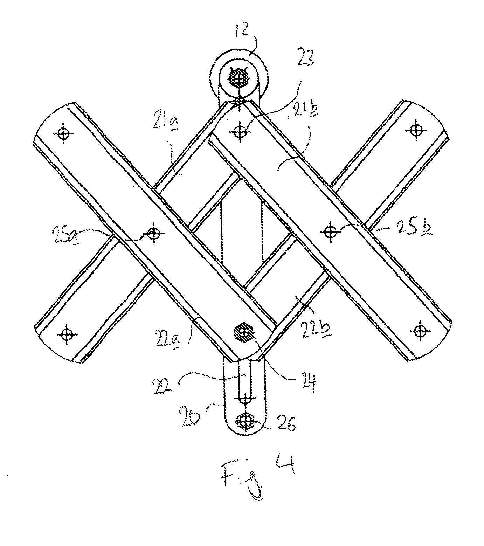

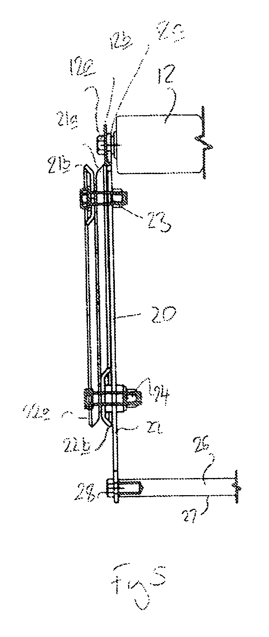

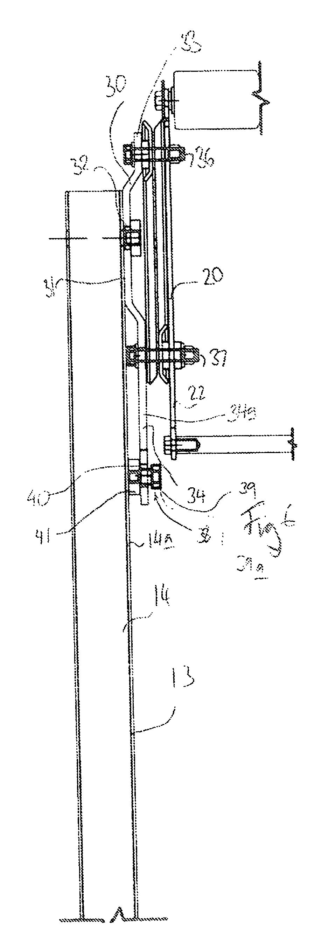

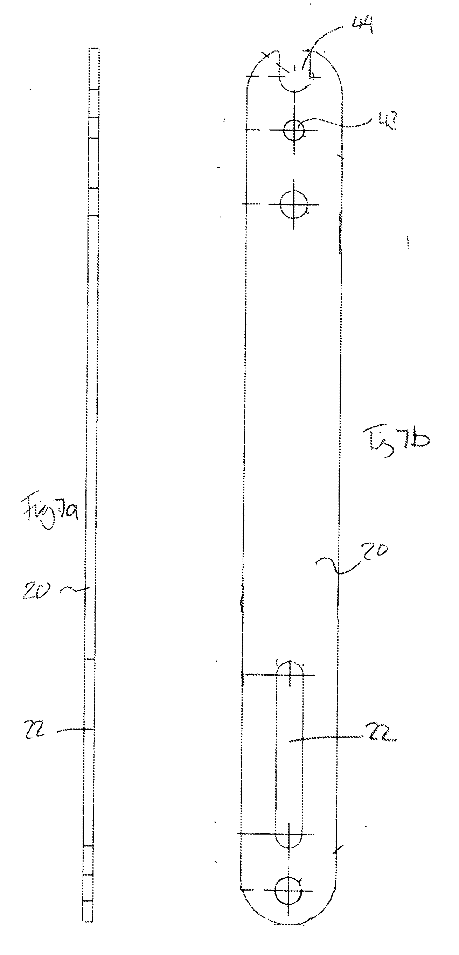

Referring now to Figures 1 to 7b, the sides 11 comprise a plurality of generally vertically extending guide elements 20. Each adjacent pair of guide elements 20 is interconnected by a pair of arms 21. At a lower part of the guide elements 20, a slideable connection to engage an end of an arm 21 is provided. In this example, the guide comprises an elongate slot 22. As best seen in Figure 4, arms 21a, 21b are pivotally connected to the guide element 20 through a pivot 23 at an upper part thereof. Arms 22a, 22b are pivotally connected to one another by a pivot 24 which is in sliding engagement with the slot 22. In the present example, a bolt 25 passes through arms 22a and 23b and through an elongate slot 22 such that arms 22a, 22b are in sliding engagement with the guide element 20. Arms 21a and 22a are pivotally connected at their mutual midpoint as shown at 25a, and arms 21b, 22b are pivotally connected at their mutual midpoint as shown at 25b. At a lower part of the guide elements 20, a rigid connector 26 is provided which rigidly connects the guide element 20 in one side 11 with the opposed guide element 20 in the opposite side 11. Accordingly, it will be seen that opposing guide elements 20 are interconnected at the upper part by a roller 12 supported by each guide element 20 and at their lower part by a rigid connector 26. As seen in Figures 5 and 6, in the present example the rigid connector 26 comprises a rod 27 attached to the guide element 20 by a bolt 28, but it will be apparent that any other appropriate rigid connection will be provided as desired.

Consequently, when the conveyor 10 is extended or contracted, the spacing between guide elements 20 will vary as arms 21a and 21b pivot relative to guide member 20 as seen in Figure 4 while arms 22a, 22b pivot relative to one another and also move by sliding relative to the guide member 20 in slot 22. Of course, the upper end of arms 22a and 22b are pivotally connected to adjacent guide members 20, while the lower ends of arms 21a, 21b are similarly in sliding engagement with adjacent guide members 20. Consequently, the conveyor 10 is extendible and contractible in a simple manner, whilst the spacing between the rigid connector 26 and the roller 12 remains constant and the height of the rollers 12 similarly remains constant.

The connection between the extendible side part 11 and the upright 14 of the support 13 is shown in Figure 6. A support bracket is shown at 30 having a first section 31 which sits flush against an inner face 14a of the upright 14 and is rigidly connected thereto by a bolt 32. The bracket 30 further has a second upper end section 33 which is displaced inwardly of the conveyor 10 relative to the first section 11. The bracket 30 also has a third, lower section 34 which similarly is inwardly directed of the conveyor 10 relative to the first portion 31. A guide element 20 is connected to the bracket 30 by an upper bolt 36 which passes through the second section 33 of the bracket 31, arms 21a and 21b and the guide element 20. This provides a fixed pivotal connection between the bracket 31, the arms 21a, 21b and guide element 20 in like manner to the connection shown in Figure 4. Similarly, the third section 34 is connected in a slideable manner to the guide element 20 by a bolt 37 which passes through the third section 34 of the bracket 30, arms 22a and 22b and the elongate slot 22 of the guide element 20. The third section 34 of the bracket 30 has an elongate slot 34a in which bolt 37 is moveable. Thus, it will be apparent that the guide element 20 and arms 21a, 21b, 22a, 22b connected to the upright 14 are moveable in exactly the same manner as the arms of the guide element of Figures 4 and 5.

At an end part of the third section 34 of the bracket 30 a floating connection to the upright 14 is shown generally at 38. A bolt 39 is connected to the upright 14 and passes through an unthreaded aperture 40 in the third section 34 of the bracket 30. The spacing of the third section 34 of the bracket 30 and the inner face 14a of the upright 14 is maintained by a washer 41. The third section 34 of the bracket 30 is thus permitted to flex in a general direction inwardly of the conveyor 10, its range of movement being constrained by a head 39a of the bolt 39.

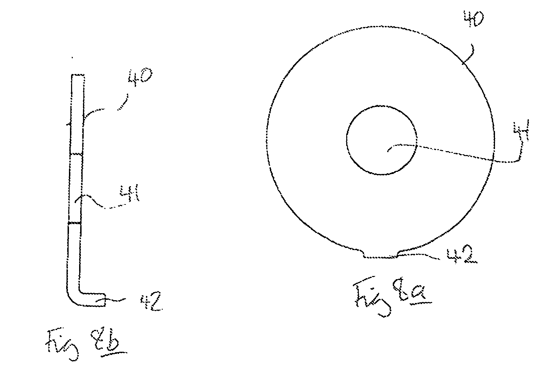

To resist disengagement of a roller 12 from the upper part of a guide element 20, each end part is provided by a locking element as shown at 40 in Figures 8a and 8b. The locking element 40 comprises an aperture to receive an end part of a roller 12, and an element to engage the guide member 20, in the present example a tab 42. An appropriate recess is provided at 43 in the guide element 20. To provide support for a roller, each roller 12 is provided with an end part 12a comprising a head 12b and a shank 12c which is engaged with rolling bearings within the roller 12. The shank 12c is received in a suitable recess 44 provided in the upper part of the guide element 20 whilst the head 12b engages the outer face of the guide element 20 to stop lateral movement of the roller 12. In the present example, locking element 40 is received over the shank 12c and is located between the head 12b and the upper part of the guide element 20 such that the tab 42 is received in aperture 43. It will be apparent that the engagement of tab 42 and aperture 43 is such that any upward force on the roller 12, which would otherwise act to disengage the connector 12a from the guide element 20, will be resisted or prevented by the locking element 40.

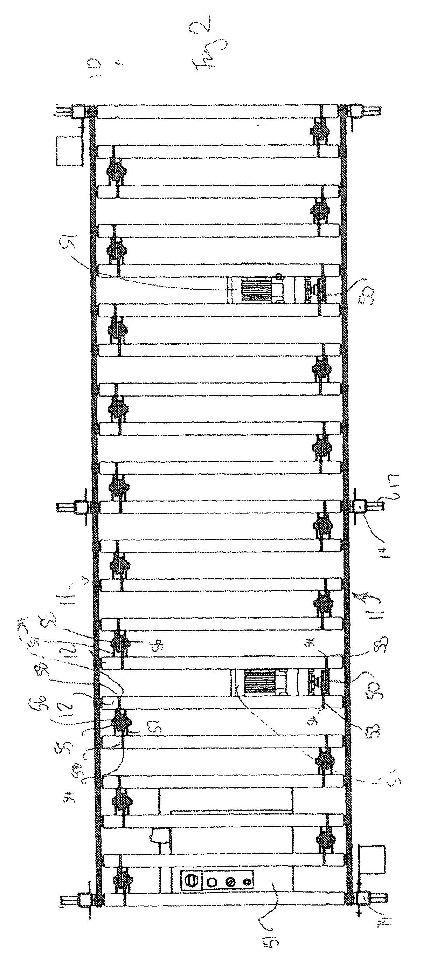

To provide drive to the rollers 12 the conveyor 10 is provided with one or more motors generally shown at 50. In the present example, the motors 50 comprise 24VDC motors and an appropriate power supply and controller is shown at 51. Each motor 50 is supported on a motor bracket generally shown at 52 which is supported on a pair of adjacent rigid connectors 26. As best seen in Figure 1, the bracket 52 has a pair of sideways extending slots 52a, 52b of differing lengths. The lengths of the slots 52a, 52b are selected such that when the conveyor 10 is extended sufficiently, the bracket 52 may be engaged with the rigid connectors 26 by first engaging the relatively long slot 52b with a first rigid connector and then moving the bracket 52 sideways sufficiently that the relatively short slot 52a can then be engaged with the adjacent rigid connector 26. It will be apparent that when the conveyor is extended or contracted, the slots 52a, 52b will permit movement of the corresponding rigid connectors 26 whilst remaining engaged with the rigid connectors 26. As seen in plan view in Figure 2, the motor 50 drives adjacent rollers 12 via flexible elastic belts 53 which are received in corresponding grooves 54 in the rollers 12. It will be apparent that the tension in the drive belts 53 will act to maintain the motor 50 in a position midway between the adjacent rollers 12, and accordingly serve to maintain the bracket 52 in engagement with the rigid connectors 26.

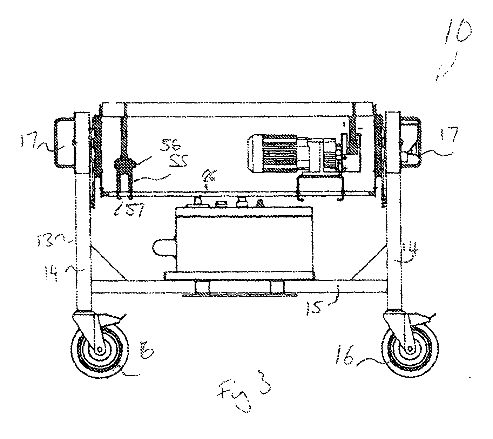

To supply drive from the motor-driven rollers to further adjacent rollers, an appropriate pulley mechanism is shown at 55 in Figures 1 and 3. A pulley wheel 56 is held in place by arms 57 which hook over adjacent rigid connectors 26. Belts 58 pass around the pulley wheel 56 and engage corresponding grooves 54 in the rollers 12. Adjacent pairs of rollers 12 are connected in this manner at alternating ends of the rollers 12 as best seen in plan view in Figure 2, thus passing drive from the motor 50 to some or all of the rollers 12 of the conveyor 10. Although in Figures 1 and 2 the rollers 12 are all driven by both motors 50, it will be apparent that, for example, zone control may be provided by having separate zones or groups of rollers 12 each driveable by independently controllable motors 50. A zero end pressure flexible roller conveyor may be thus provided, or other control methods provided as desirable.

Such a flexible roller conveyor has been found to be advantageous over known flexible conveyors for a number of reasons. The conveyor as a whole has been found to be considerably less prone to wear and failure as a result of the tolerance to movement and misalignment provided by the floating part of the support bracket 30. The configuration of the rollers 12, guide elements 20 and rigid connectors 26 ensures that the roller 12 are at a constant height and the rigid connectors 26 are similarly at a constant height and constant spacing from the rollers 12. This additionally enables the motors 50 to be safely and reliably supported on the conveyor without the disadvantages of known configurations. The provision of a 24VDC driving motor removes the need for complicated and potentially dangerous power supplies and the provision of a locking mechanism prevents the accidental disengagement of the rollers 12 from the guide elements 20. Accordingly, these improvements provide a more robust and reliable flexible roller conveyor.

When used in this specification and claims, the terms "comprises" and "comprising" and variations thereof mean that the specified features, steps or integers are included. The terms are not to be interpreted to exclude the presence of other features, steps or components.

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. A flexible conveyor (10) comprising opposed extendible sides (11), the extendible sides (11) supporting a plurality of rollers (12) therebetween,
each of the opposed extendible sides (11) comprising a plurality of guide elements (20), the guide elements (20) having a connection part thereof to engage a roller (12), each guide element (20) being connected to an opposing guide element (20) by a rigid connector (26),
each guide element (20) being connected to an adjacent guide element by a pair of arms (21, 22), one of the arms (21, 22) being pivotally attached at an end part thereof to the guide element (20), the other of the arms (21, 22) being slidably engaged with the guide element (20), the opposed extendible sides (11) extending between supports (13), wherein a guide element (20) of each opposed extendible side (11) is connected to the support (13) through a support bracket (30), the support bracket (30) having a first connection (31) fixedly connected to the support (13), **characterised in that** the support bracket (30) has a second floating connection (38) at a lower point, whereby the support bracket (30) is permitted to flex relative to the support (13).

2. A flexible conveyor (10) according to claim 1 wherein the support bracket (30) has an elongate slot (34a) to enable slidable engagement with a guide element (20).

3. A flexible conveyor according to claim 2 wherein the supports (13) are provided with wheels (16) at a lower part thereof.

4. A flexible conveyor (10) according to any one of the preceding claims wherein at least one of the rollers (12) is driven.

5. A flexible conveyor (10) according to claim 4 wherein the driven roller (12) is driven by a motor (50) supported on the rigid connectors (26) extending between a plurality of the guide elements (20).

6. A flexible conveyor (10) according to claim 5 wherein the motor (50) is mounted on a motor support bracket (52), the motor support bracket (52) having opposed recesses (52a, 52b) to engage the rigid connectors (26).

7. A flexible conveyor (10) according to any one of claims 4 to 6 wherein a plurality of the rollers (12) are driveably connected to the driven roller (12).

8. A flexible conveyor (12) according to claim 7 wherein the rollers (12) are drivingly connected via drive belts (53).

9. A flexible conveyor (10) according to claim 8 wherein the drive belts (53) engage pulley wheels (56) supported on the rigid connectors (26).

10. A flexible conveyor (10) according to any one of claims 5 to 9 wherein the motor (50) comprises a 24 volt DC motor.

11. A flexible conveyor (10) according to any one of the preceding claims wherein an end part of at least one of the rollers (12) is connected to a locking element (40), the locking element (40) being shaped to engage the guide element (20) when the roller (12) is supported by the guide element (20), the locking element (40) being operable to resist disengagement of the roller (12) and the guide element (20).

12. A flexible conveyor (10) according to claim 11 wherein the locking element (40) comprises an aperture (43) to receive an end part of the roller (12) and a projection (42) to engage a recess (44) on the guide element (20).

## Patentansprüche

1. Flexible Förderanlage (10), gegenüberliegende, ausfahrbare Seiten (11) umfassend, wobei die ausfahrbaren Seiten (11) zwischen sich mehrere Walzen (12) tragen, wobei jede der gegenüberliegenden, ausfahrbaren Seiten (11) mehrere Führungselemente (20) umfasst, wobei die Führungselemente (20) ein Verbindungsteil zum Eingreifen mit einer Walze (12) aufweisen, jedes Führungselement (20) durch ein starres Verbindungsmittel (26) mit einem gegenüberliegenden Führungselement (20) verbunden ist, jedes Führungselement (20) durch ein Paar Arme (21, 22) mit einem benachbarten Führungselement verbunden ist, wobei einer der Arme (21, 22) mit einem seiner Endteile schwenkbar am Führungselement (20) angebracht ist, der andere der Arme (21, 22) gleitfähig in das Führungselement (20) eingreift, wobei die gegenüberliegenden, ausfahrbaren Seiten (11) zwischen Auflagern (13) verlaufen, wobei ein Führungselement (20) jeder der gegenüberliegenden, ausfahrbaren Seiten (11) durch einen Stützblock (30) mit dem Auflager (13) verbunden ist, wobei der Stützblock (30) ein erstes Verbindungsstück (31) aufweist, das fest mit dem Auflager (13) verbunden ist, wobei der Stützblock (30) an einem tieferen Punkt ein zweites, gleitendes Verbindungsstück (38) aufweist, wobei es dem Stützblock (30) gestattet ist, sich im Verhältnis zum Auflager (13) zu biegen.

2. Flexible Förderanlage (10) nach Anspruch 1, wobei der Stützblock (30) einen länglichen Schlitz (34a) aufweist, um den gleitenden Eingriff mit einem Führungselement (20) zu ermöglichen.

3. Flexible Förderanlage nach Anspruch 2, wobei die Auflager (13) an ihrem unteren Teil mit Rädern (16) ausgestattet sind.

4. Flexible Förderanlage (10) nach einem der vorhergehenden Ansprüche, wobei mindestens eine der Walzen (12) angetrieben wird.

5. Flexible Förderanlage (10) nach Anspruch 4, wobei die angetriebene Walze (12) durch einen Motor (50) angetrieben wird, der auf den starren Verbindungsmitteln (26) aufliegt, die zwischen mehreren der Führungselemente (20) verlaufen.

6. Flexible Förderanlage (10) nach Anspruch 5, wobei der Motor (50) auf einen Motorstützblock (52) montiert ist, wobei der Motorstützblock (52) gegenüberliegende Vertiefungen (52a, 52b) zum Eingriff mit den starren Verbindungsmitteln (26) aufweist.

7. Flexible Förderanlage (10) nach einem der Ansprüche 4 bis 6, wobei mehrere der Walzen (12) antreibbar mit der angetriebenen Walze (12) verbunden sind.

8. Flexible Förderanlage (10) nach Anspruch 7, wobei die Walzen (12) über Antriebsriemen (53) antreibbar verbunden sind.

9. Flexible Förderanlage (10) nach Anspruch 8, wobei die Antriebsriemen (53) in Rillenscheiben (56) eingreifen, die auf den starren Verbindungsmitteln (26) aufliegen.

10. Flexible Förderanlage (10) nach einem der Ansprüche 5 bis 9, wobei der Motor (50) einen 24-Volt-Gleichstrommotor umfasst.

11. Flexible Förderanlage (10) nach einem der vorhergehenden Ansprüche, wobei ein Endteil mindestens einer der Walzen (12) mit einem Arretierelement (40) verbunden ist, wobei das Arretierelement (40) dafür geformt ist, in das Führungselement (20) einzugreifen, wenn die Walze (12) auf dem Führungselement (20) aufliegt, wobei das Arretierelement (40) derart betreibbar ist, dass es dem Lösen der Walze (12) und des Führungselements (20) voneinander entgegenwirkt.

12. Flexible Förderanlage (10) nach Anspruch 11, wobei das Arretierelement (40) eine Öffnung (43) umfasst, um ein Enteil der Walze (12) aufzunehmen, und eine Nase (42), um in eine Vertiefung (44) am Führungselement (20) einzugreifen.

## Revendications

1. Un convoyeur flexible (10) muni de côtés extensibles opposés (11), les côtés extensibles (11) supportant plusieurs rouleaux (12) entre eux,
chacun des côtés extensibles opposés (11) comprenant plusieurs éléments de guidage (20), les éléments de guidage (20) ayant une partie de raccordement destinée à entrer en contact avec un rouleau (12), chaque élément de guidage (20) étant raccordé à un élément de guidage opposé (20) par un raccord rigide (26),
chaque élément de guidage (20) étant connecté à un élément de guidage adjacent par une paire de bras (21, 22), un des bras (21, 22) étant fixé de manière pivotante par une partie d'extrémité à l'élément de guidage (20), l'autre des bras (21, 22) entrant en contact par glissement avec l'élément de guidage (20), les côtés extensibles opposés (11) se trouvant entre des supports (13), dans lequel un élément de guidage (20) de chaque côté extensible opposé (11) est raccordé au support (13) par une console support (30), la console support (30) ayant un premier raccordement (31) raccordé de manière fixe au support (13), la console de support (30) ayant un deuxième raccordement flottant (38) à un point inférieur, la console de support (30) pouvant fléchir par rapport au support (13).

2. Un convoyeur flexible (10) selon la revendication 1, dans lequel la console de support (30) possède une fente allongée (34a) pour permettre le contact par glissement avec un élément de guidage (20).

3. Un convoyeur flexible selon la revendication 2, dans lequel les supports (13) sont munis de roues (16) à une partie inférieure.

4. Un convoyeur flexible (10) selon n'importe laquelle des revendications précédentes, dans lequel au moins un des rouleaux (12) est entraîné.

5. Un convoyeur flexible (10) selon la revendication 4, dans lequel le rouleau entraîné (12) est entraîné par un moteur (50) supporté sur les raccords rigides (26) présents entre plusieurs des éléments de guidage (20).

6. Un convoyeur flexible (10) selon la revendication 5, dans lequel le moteur (50) est monté sur une console de support de moteur (52), la console de support de moteur (52) possédant des renfoncements opposés (52a, 52b) pour permettre le contact avec les raccords rigides (26).

7. Un convoyeur flexible (10) selon n'importe laquelle des revendications 4 à 6, dans lequel plusieurs des rouleaux (12) sont raccordés par entraînement au rouleau entraîné (12).

8. Un convoyeur flexible (12) selon la revendication 7, dans lequel les rouleaux (12) sont raccordés par entraînement via des courroies de transmission (53).

9. Un convoyeur flexible (10) selon la revendication 8, dans lequel les courroies de transmission (53) sont en contact avec des roues de poulie (56) supportées sur les connecteurs rigides (26).

10. Un convoyeur flexible (10) selon n'importe laquelle des revendications 5 à 9, dans lequel le moteur (50) est un moteur de 24 volts CC.

11. Un convoyeur flexible (10) selon n'importe laquelle des revendications précédentes, dans lequel une partie d'extrémité d'au moins un des rouleaux (12) est raccordée à un élément de verrouillage (40), l'élément de verrouillage (40) possédant une forme lui permettant d'entrer en contact avec l'élément de guidage (20) lorsque le rouleau (12) est supporté par l'élément de guidage (20), l'élément de verrouillage (40) pouvant résister à la déconnexion du rouleau (12) et de l'élément de guidage (20).

12. Un convoyeur flexible (10) selon la revendication 11, dans lequel l'élément de verrouillage (40) comprend une ouverture (43) destinée à recevoir une partie d'extrémité du rouleau (12) et une projection (42) destinée à entrée dans un renfoncement (44) de l'élément de guidage (20).
